# EUROPEAN PATENT SPECIFICATION

(11) **EP 2 363 260 B1**
(45) Date of publication and mention of the grant of the patent: **24.07.2013**
(21) Application number: 11156639.4
(22) Date of filing: 02.03.2011
(51) Int. Cl.: B27M 1/08, B23Q 7/04, B23Q 3/06, B27F 1/04, B23Q 1/03, B23Q 1/52, B25B 5/00, B25B 5/06

(54) **Apparatus for machining workpieces**
Einrichtung zum Bearbeiten von Werkstücken
Appareil pour usiner des pièces

(30) Priority: 02.03.2010 IT MO20100051
(43) Date of publication of application: 07.09.2011
(73) Proprietor: SCM Group S.p.A., 47900 Rimini (IT)
(72) Inventor: Perazzoli, Umberto, 29010, S. Polo di Podenzano (PC) (IT)
(74) Representative: Cicconetti, Andrea

(56) References cited:
- EP-A1- 0 744 244
- EP-A1- 2 153 954
- EP-A2- 0 424 332
- EP-A2- 2 067 586
- EP-A2- 2 105 269
- US-A1- 2003 024 363

## Description

### Background of the invention

The invention relates to an apparatus for machining workpieces, in particular for machining workpieces made of wood or of material that is similar to wood.

Specifically, but not exclusively, the apparatus can be used for the longitudinal profiling of elements with an elongated shape, such as, for example, frame elements (frames for doors and windows), and for performing further machinings (making holes, tenons, etc) on the elements.

The prior art comprises US patent US 6, 974, 365. **Each of** EP 0 744 244 A1 **and** EP 0 424 332 A2 discloses a machine made according to the preamble of the first claim.

One of the drawbacks of known machines is the poor versatility thereof, in particular in performing a variety of machinings (for example longitudinal profiling and special machinings such as making tenons and holes) in a simple and rapid manner.

One problem of known machines is the poor quality of the machined product due to machining errors that are a consequence of the fact that the locking members (grippers) have to be repositioned, also several times, in the direction of the length of the workpiece, to enable various parts and/or surfaces of the workpiece to be machined.

Another problem is that of ensuring, in particular for longitudinal profiling machinings, that grasping of the workpieces being machined is strong, homogenous, reliable and with a relatively reduced longitudinal step of the locking members (grippers), so as to avoid vibrations that could decrease the quality of the machined product.

### Summary of the invention

One object of the invention is to remedy one of more of the aforesaid limits and problems of the prior art.

One advantage of the invention is to reduce vibrations during machining of the workpiece, thus improving the quality of the finished product.

Another advantage is to enable longitudinal profiling, and enable particular machinings to be performed, such as the forming of holes and/or tenons, in a simple and rapid manner.

A further advantage is to enable machining of various parts and/or surfaces of a workpiece, maintaining the workpiece always locked and without the need to reposition the workpiece and/or the locking members of the workpiece.

Such objects and advantages and still others are all achieved by the apparatus and by the method according to any one of the claims set out below.

### Brief description of the drawings

The invention can be better understood and implemented with reference to the attached drawings that illustrate an example thereof by way of non-limiting example.
Figure 1 is a top plan view of an example of a machine made according to the invention.
Figure 2 is a side view in a vertical elevation from the bottom of figure 1.
Figures 3, 4 and 5 show three enlarged details of figure 1 relating respectively to the three locking devices 6, 7 and 8.
Figure 6 shows a gripper 60 of the locking device 6 in an active configuration.
Figure 7 shows the gripper in figure 6 in a clear-away configuration.
Figures 8, 9 and 10 are three side views in a vertical elevation of the gripper in figure 6 in three different operating configurations.
Figures 11 and 12 are two views of the locking device 6 in an operating configuration.
Figure 13 a side view in a vertical elevation of the locking device in the configuration in figures 11 and 12, in which some operating units are visible.

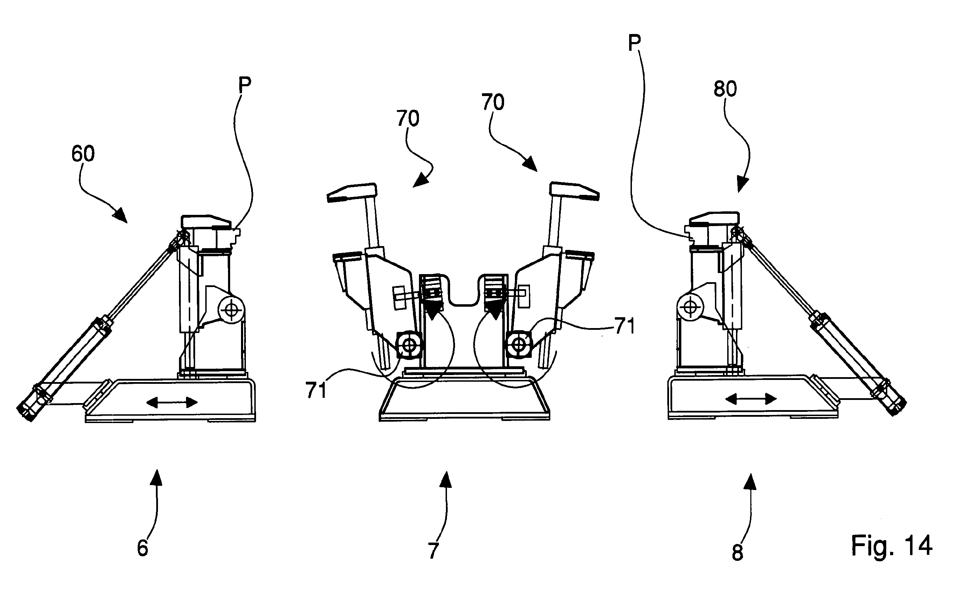

Figures 14 to 17 are four side views in a vertical elevation that show in sequence certain steps of the passage of two workpieces being machined by the external locking devices 6 and 8 to the central locking device 7 to enable two opposite sides of each workpiece to be machined (profiled).
Figure 18 is a top plan view of a second machine example according to the invention, in which the portal structure has a crosspiece that is longer than figure 1 in such a manner as to be able to affect a second group of locking devices 6, 7 and 8 alongside the first group.

### Detailed description

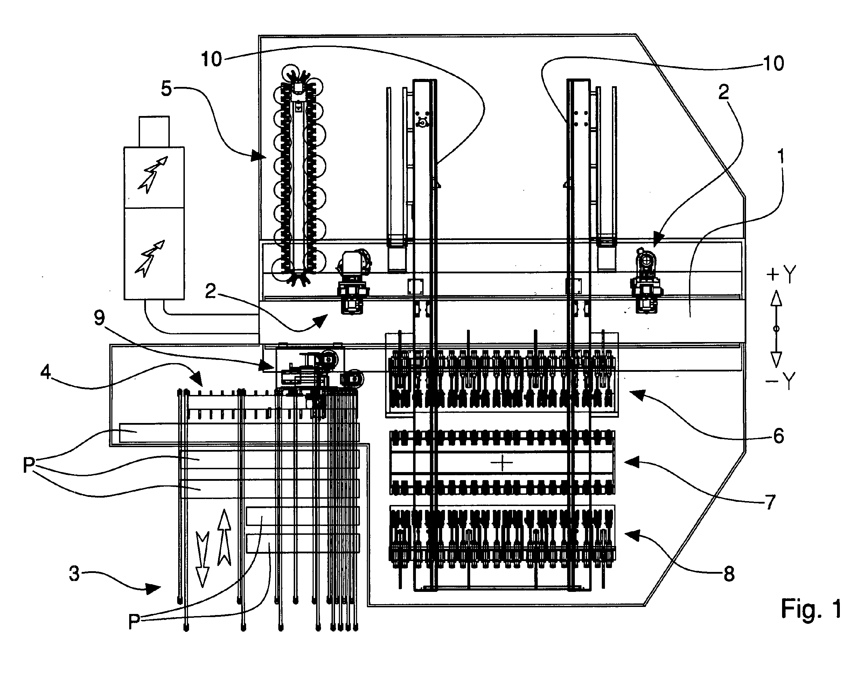

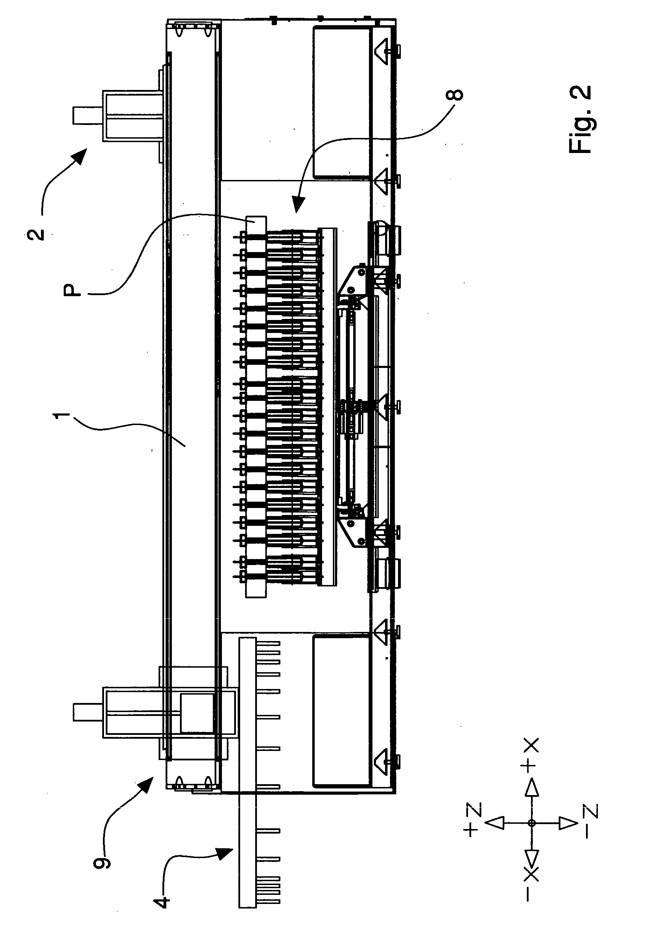

In figures 1 and 2 there is illustrated schematically overall an apparatus for machining workpieces that, in the specific case, comprises a portal structure, with an upper crosspiece 1, of fixed type. The crosspiece 1 can carry, as in the case illustrated here, one or more operating units 2 arranged, for example, on a single side of the portal or on both sides. The operating units 2, of known type, are set up for machining the workpieces by using tools, which are also of known type (drilling and/or milling and/or profiling tools, etc). Each operating unit 2 is movable along the axis x-x and is able to move the tool along the z-z (vertical) axis.

The apparatus may further comprise, as in the specific case, a supplying/conveying device 3 (of known type, for example of the belt type) for loading and/or unloading machining workpieces P (that are to be machined and/or have already been machined). The workpieces P can be, for example, elements for casings (for example with an elongated shape with 5 different lengths). It is possible to set up a gripping device 4 (of known type, for example of the gripper type) to take the workpiece P to be machined from the conveying device 3 to the machining zone and/or to return the machined workpiece P to the conveying device 3.

The apparatus can be further provided, as in the specific example, with an automatic toolholder magazine 5 (of known type) operationally associated with the operating units 2 for the automatic tool change.

With 6, 7 and 8 three workpiece locking devices are indicated that lock the workpieces P whilst they are machined by the operating units 2, as will be explained better below.

The gripping device 4 can be configured to deliver the workpieces to be machined to at least one locking device 6, 7, 8 and/or for removing the machined workpieces from at least one locking device 6, 7, 8. For this purpose, the gripping device 4 can be movable along the axis x-x. The gripping device 4 can be carried, as in the specific example, by a carriage 9 that is slidable along the crosspiece 1, for example slidable on the crosspiece side 1 opposite a side in which the operating units 2 machine.

The three locking devices 6, 7 and 8 can be movable along the machining axis y-y independently from one another. The movement driving means of the various locking devices are of known type. In the specific case a single axial movement guide is set up that supports the three locking devices 6, 7 and 8. This axial movement y-y guide comprises in the case in point a pair of longitudinal members 10.

Subsequently, the three locking devices 6, 7 and 8 will be disclosed in greater detail.

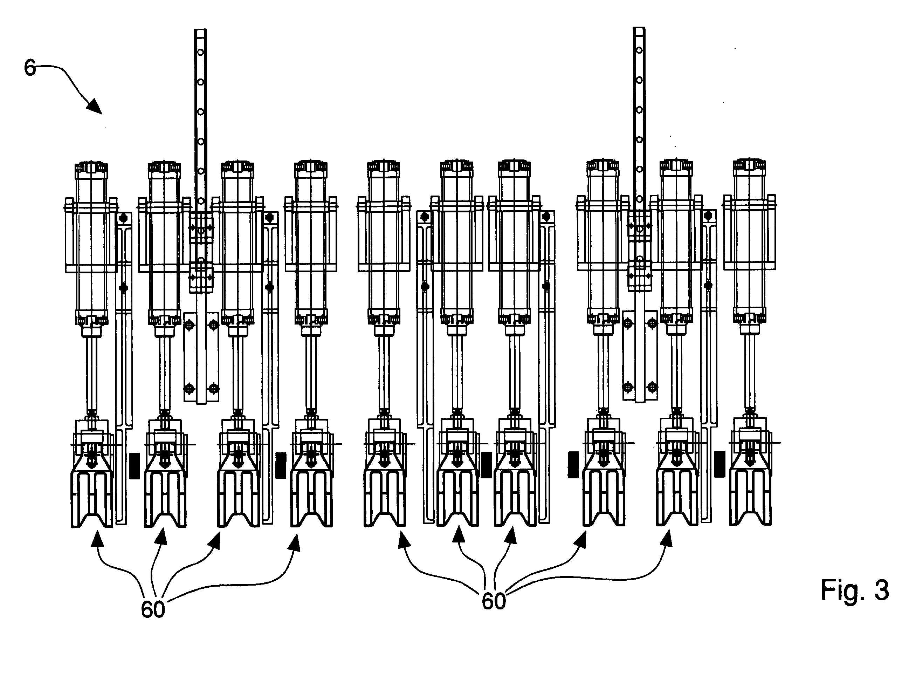

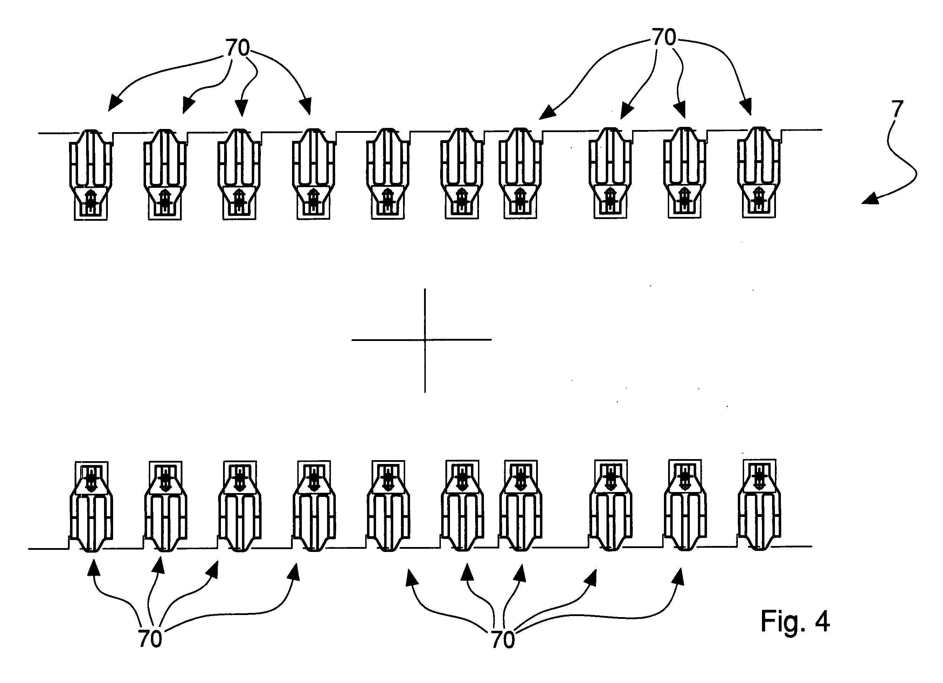

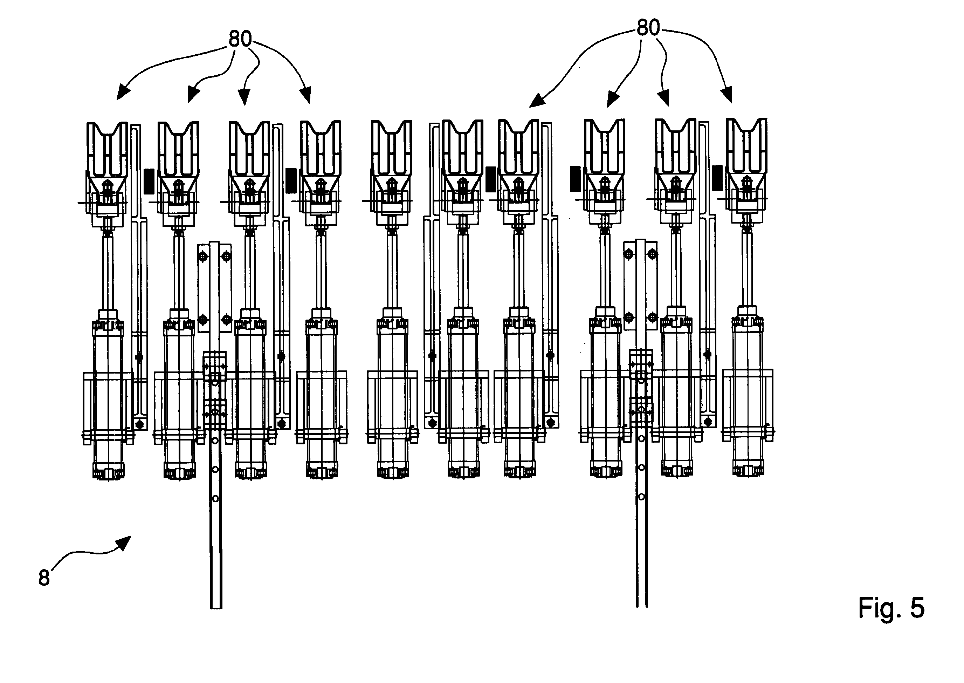

The first locking device 6 comprises a plurality of first grippers 60 (some of them are shown in greater detail in figure 3) arranged alongside one another to form a row of grippers (that are substantially the same as one another). The second locking device 7 comprises a plurality of second grippers 70 (some of them are shown in greater detail in figure 4) arranged alongside one another to form two opposite rows of grippers (which are also the same as one another). The third locking device 8 comprises a plurality of third grippers 80 (some of them are shown in figure 5) arranged alongside one another to form a row of grippers (that are the same as one another). The second locking device 7 is arranged in the centre between the other two locking devices 6 and 8 that are external and symmetrical to one another with respect to a vertically symmetrical plane that is perpendicular to the axis y-y. A row of second grippers 70 of the second central locking device 7 is arranged parallel and facing the row of first external grippers 60, whilst the other row of second central grippers 70 is parallel to and faces the other row of third external grippers 80.

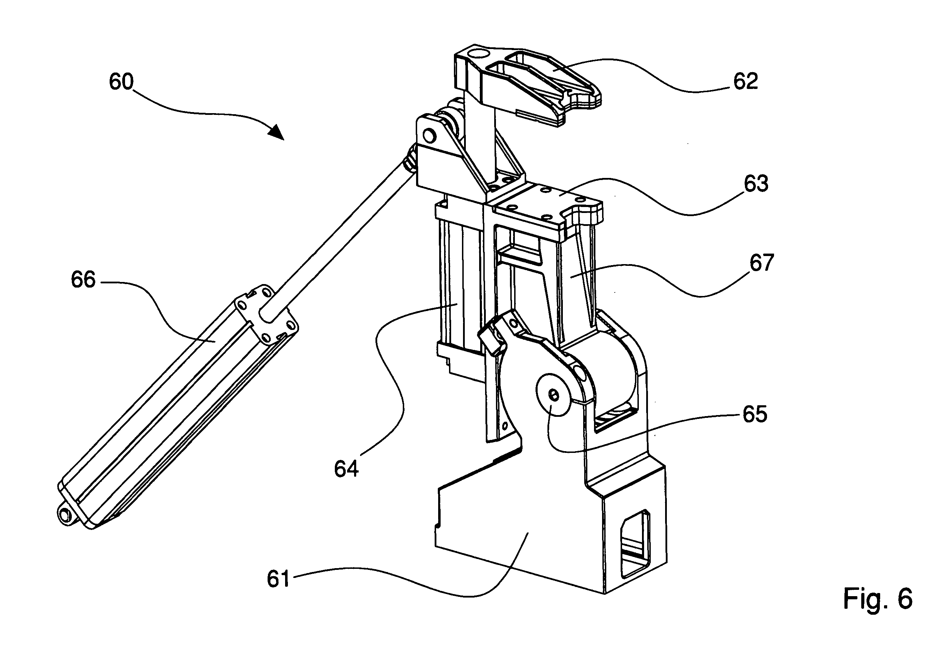

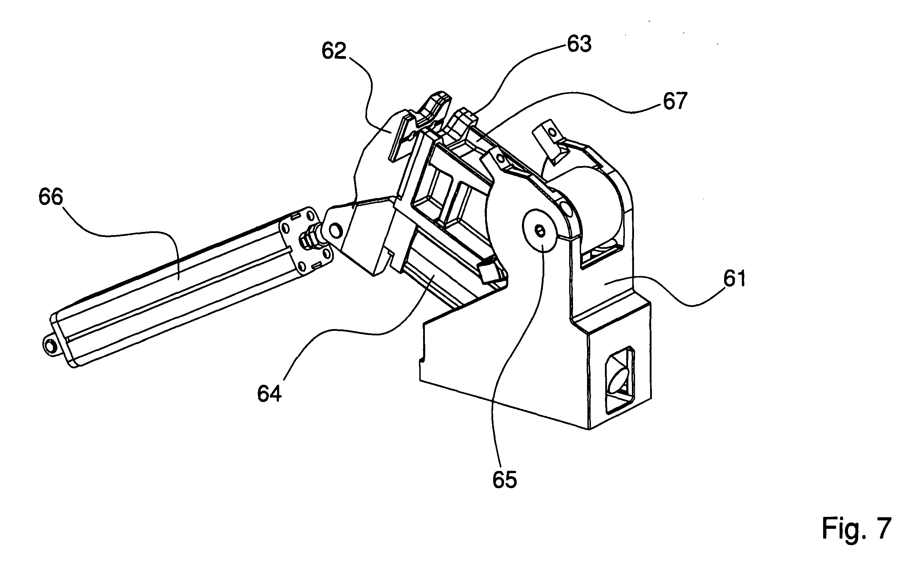

In figures 6 and 7 a first gripper 60 is illustrated in greater detail. It should be considered, for the purposes of the present description, that the third grippers 80 can be arranged symmetrically and be structured in a manner that is the same as the first grippers 60. Each first gripper 60 comprises a support 61, a pair of jaws (upper jaw 62 and lower jaw 63) for clamping the workpiece P, an actuator 64 that supplies the grasping force of the gripper, a rotation pivot 65 for rotatable coupling of the jaws 62, 63 on the support 61, an actuator 66 to rotate the jaws about the pivot 65, a gripper body 67 that carries the jaws 62, 63 and the actuator 64. The actuators 64 and 66 can be linear fluid-driven, in particular pneumatic driven, as in the specific example. The actuator 64 can be operationally associated with a jaw, for example the upper jaw 62, and will thus be movable towards and away from the lower fixed jaw 63, as in the illustrated example.

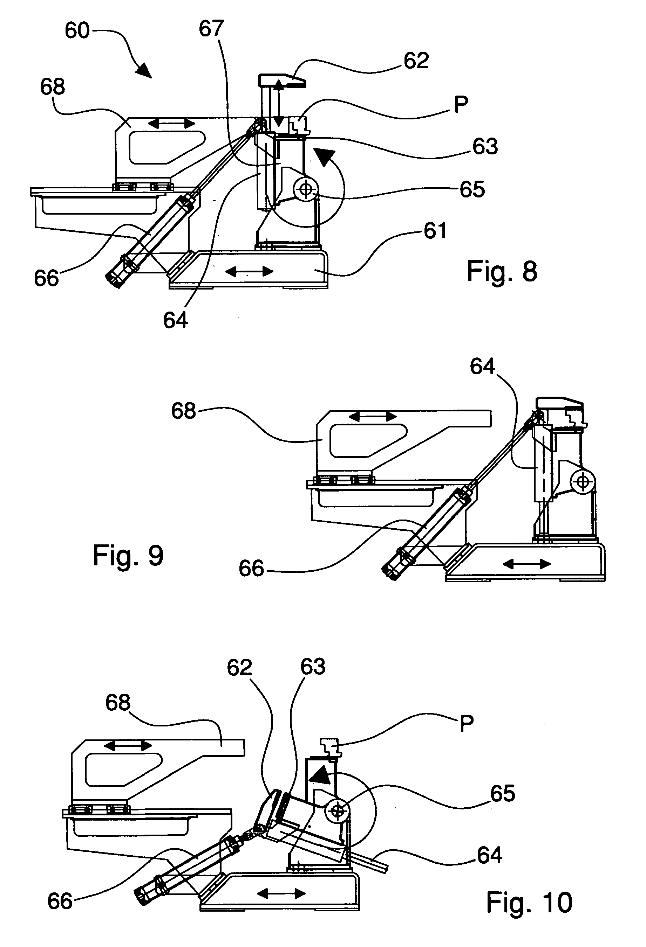

In figures 8 to 10 there is illustrated an open operating position of a gripper to be able to receive/release the workpiece P (figure 8), a closed operating position of a gripper that clamps the workpiece P (figure 9) and an inactive clear-away position in which the gripper is excluded from the grasping action and is moved away by the workpiece P. In this last position of exclusion of at least a first gripper 60, the workpiece P can be held tight by other first grippers 60 (that are not illustrated in figure 10 and are adjacent to the first illustrated gripper) of the same first locking device 6.

Substantially, the gripper 60 is able to assume an open position (figure 8), in which the upper jaw 62 and lower jaw 63 define an opening for inserting and extracting the workpiece P, a closed locking position (figure 9) in which the jaws clamp the workpiece P between two opposite sides, and a retracted clear-away position (figure 10) in which the gripper 60 is far from the workpiece P.

The first gripper 60 can be provided, as in the example in figures 8 to 10, with a reference member 68 (that is movable, for example axially slidable, with movement towards and away from the workpiece P locking zone) which may act as a guide and reference for correct positioning of the workpiece P.

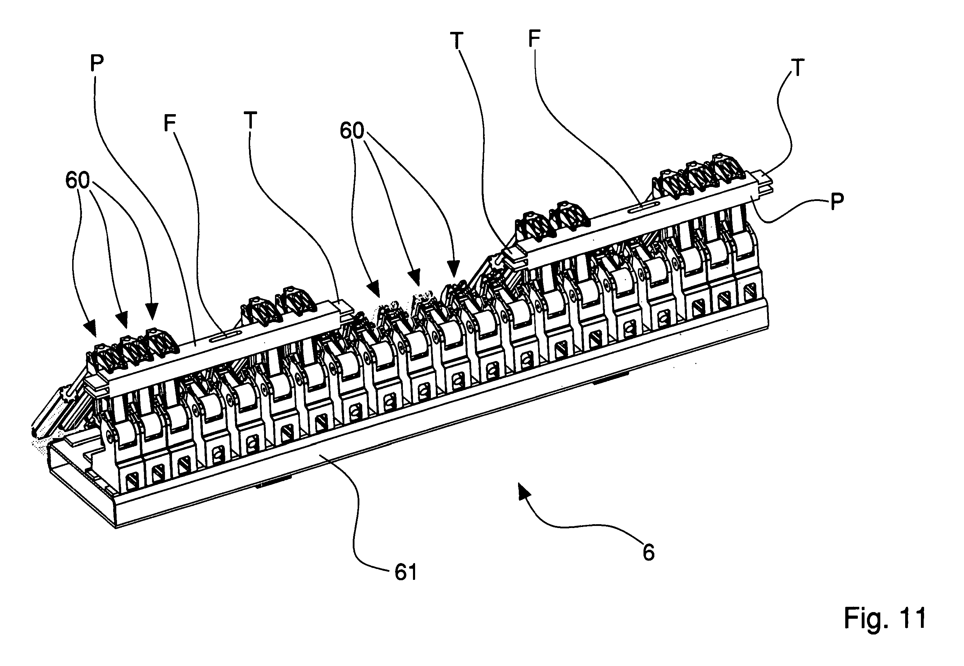

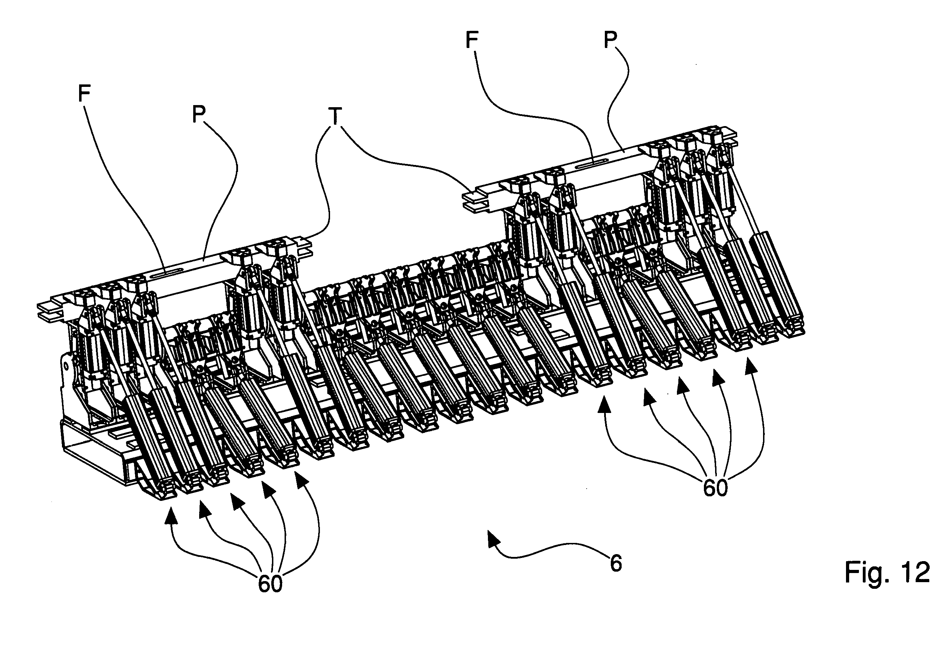

In figures 11 and 12 there is illustrated (in two views, a front and rear view) the first locking device 6 with some first grippers 60 that clamp a workpiece P in a closed operating position and other first grippers 60 in a clear-away retracted position in which they are excluded from the grasping action. The first grippers in clear-away position leave at least one side or a zone of the workpiece being machined free to enable access to at least one operating unit 2.

In the specific case the first locking device 6 holds two workpieces P tight, leaving the zone between the two workpieces P free. For example, access to a tool for making tenons T at the ends of the workpieces P is possible, the tenons will be used for the subsequent formation of the casing by mortising in the known manner.

In the example in figures 11 and 12 other first grippers 60 have also been excluded such as to leave free a part of the upper (and lower) side of each workpiece P for making a hole F (intended, for example, for subsequent insertion and/or fixing of handles or of other accessory elements for the casing).

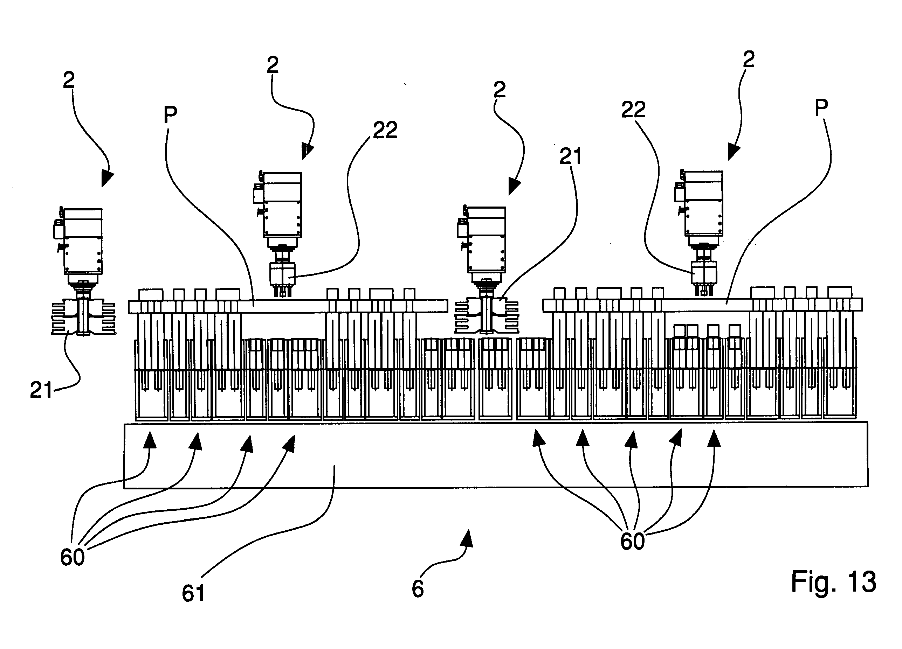

In figure 13, for the sake of greater clarity, the operating units 2 have been shown provided with the tools 21 and 22 for making, respectively, tenons and holes. Such tools can work in the zones left free by the first grippers 60 in the clear-away position, whilst the first grippers 60 in the active position will maintain the workpiece P being machined locked.

Longitudinal profiling machining can on the other hand be performed with the workpiece P locked by all the grippers that affect the length of the workpiece, such as to improve the hold of the grasping action, reduce vibrations and thus improve the quality of the finished product.

In particular, it will be possible to perform first a tenoning machining (with some grippers unarmed, i.e. in the clear-away position to leave the machining zone free), then a drilling-milling operation (this also with some grippers disarmed, in particular the grippers will be disarmed that in the locking position affect the hole drilling zone and the grippers can be rearmed that affect the end zones where the tenons have been formed), then the longitudinal profiling (with all the grippers connected to the length of the workpiece that will be rearmed in the locking position) is conducted

The aforesaid steps can all be taken whilst maintaining the workpiece locked by the gripping device, without alternating the status of the locking grippers that are not affected by the machining zones and without the need to reposition the workpiece. In particular, it is observed that there is no need to position the locking grippers in a longitudinal direction (in the direction of the length of the workpiece and of the row of locking grippers).

The gripping device thus enables some grippers to be activated or deactivated that are operationally associated with set zones of the workpiece in function of the machining that has to be performed. The workpiece will nevertheless be maintained locked, owing to some grippers that will clamp the workpiece in other preset zones to enable the workpiece to be machined.

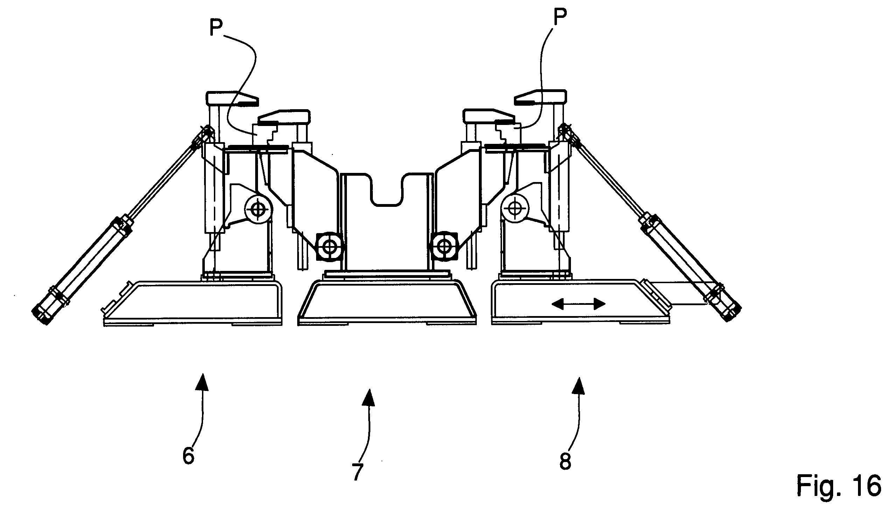

In order to perform longitudinal profiling on both sides of the workpiece, the latter is passed from one locking device to the other, as is explained better by figures 16 to 19, in which a sequence of steps of a method for the passage of the workpiece P from one locking device to the other is explained.

As said, initially, (figure 16) a workpiece P is maintained locked by the first locking device 6. Optionally, as in the specific case, another workpiece can be maintained locked by the other external locking device, i.e. the third locking device 8. It has already been seen that in this position a side of each workpiece can be profiled longitudinally (in a manner that is known and is not disclosed in detail). It has also been seen that other machinings (tenoning, drilling, etc) can be conducted, as disclosed previously, by excluding some of the first grippers 60 and/or third grippers 80 from the grasping action to enable access of the appropriate tools.

The apparatus then enables machining of also the zone of the workpiece occupied by the grippers, which necessary, as in figure 16, have to keep anyway the workpiece locked. In particular it will be possible to perform longitudinal profiling also on the other side of the workpiece that cannot be initially profiled because of the presence of the grippers.

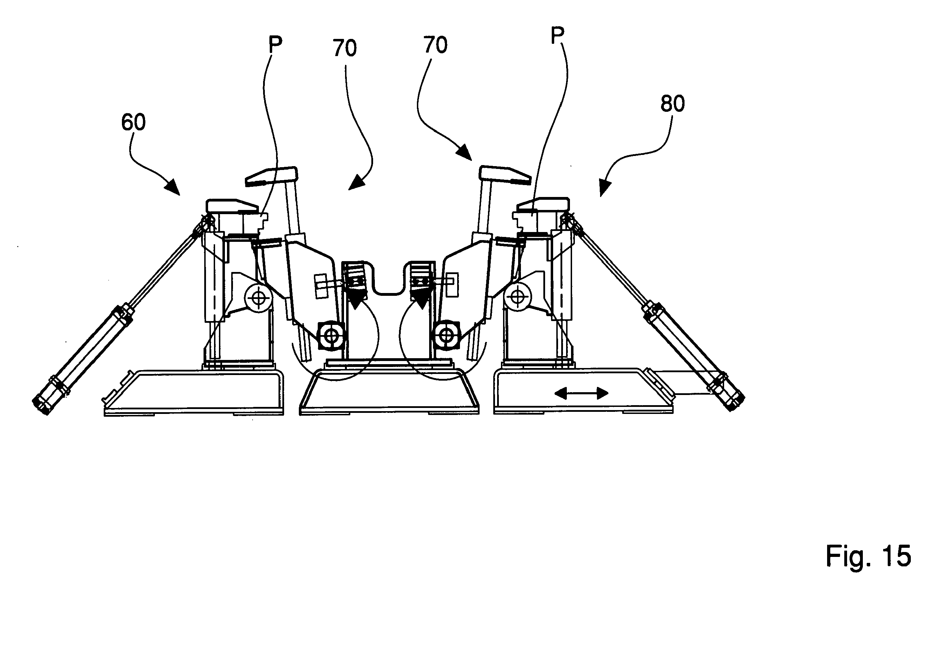

For this purpose, by (independent) movements along the axis y-y the various locking devices 6, 7 and 8 can be brought together (in figure 15 devices 6, 7 and 8 are shown in the near position of the gripper change). In preparation for the gripper change step, the second grippers 70 of the central locking device 7 can rotate about a rotation pivot 71 in such a manner as to tilt slightly forward, in order not to damage the workpiece P (in particular the lower side of the workpiece) locked by the external locking device 6 and/or 8 during the step of approaching and inserting into the workpiece P. In particular, the slight tilt of at least the lower jaw of the second gripper 70 (or of both the upper and lower jaws of the gripper 70), prevents the gripper being able to knock against the workpiece because, for example, of possible errors of flatness of the workpiece or errors of positioning of the grippers. An actuator (for example of linear fluid-driven type) will be set up to rotate the gripper 70 about the pivot 71. There will then be another actuator for driving the grasping movement with which the upper and lower jaws of the gripper 70 will clamp the workpiece.

The gripper change (passage of a workpiece P from a row of external grippers 60 or 80 to a row of central grippers 70) occurs by aligning the central grippers 70 (in the specific case by rotating clockwise, with reference 5 in figure 16, about the pivot 71 to pass from the tilted position to the aligned position with the other grippers 60 or 80 and with the workpiece), then locking the workpiece P with the second grippers 70 of the second central locking device 7 to then release the grippers 60 and 80 of the first and second, 6 and 8 side locking devices.

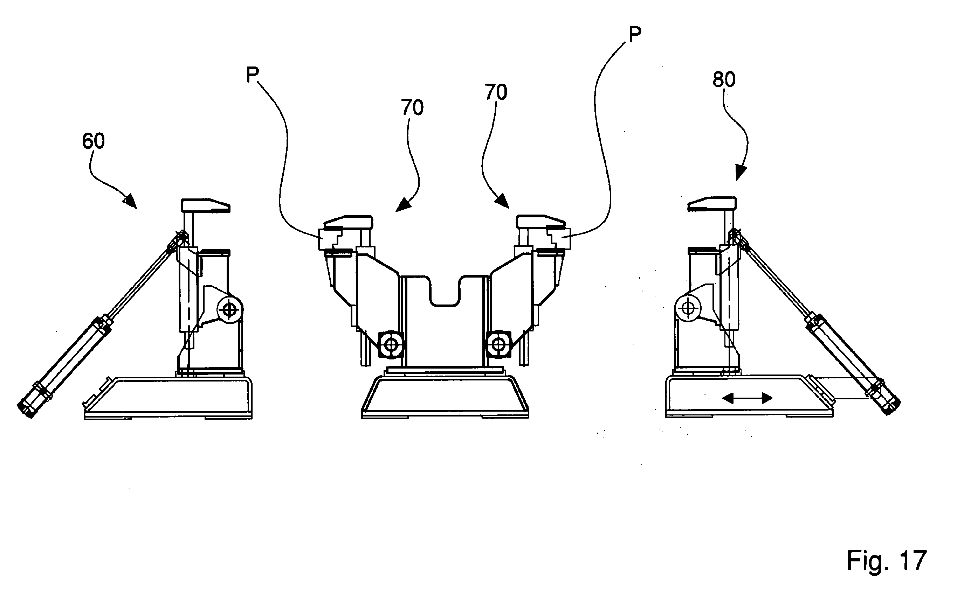

The three locking devices are then moved away from one another (figure 17) to enable machining (in particular profiling of the second side) on each workpiece held tight by a row of second grippers 70.

Once the various machinings have finished, the second locking device 7 can be taken to a preset workpiece unloading position where the gripping device 4 can remove the machined workpieces and transfer the workpieces to the conveying device 3.

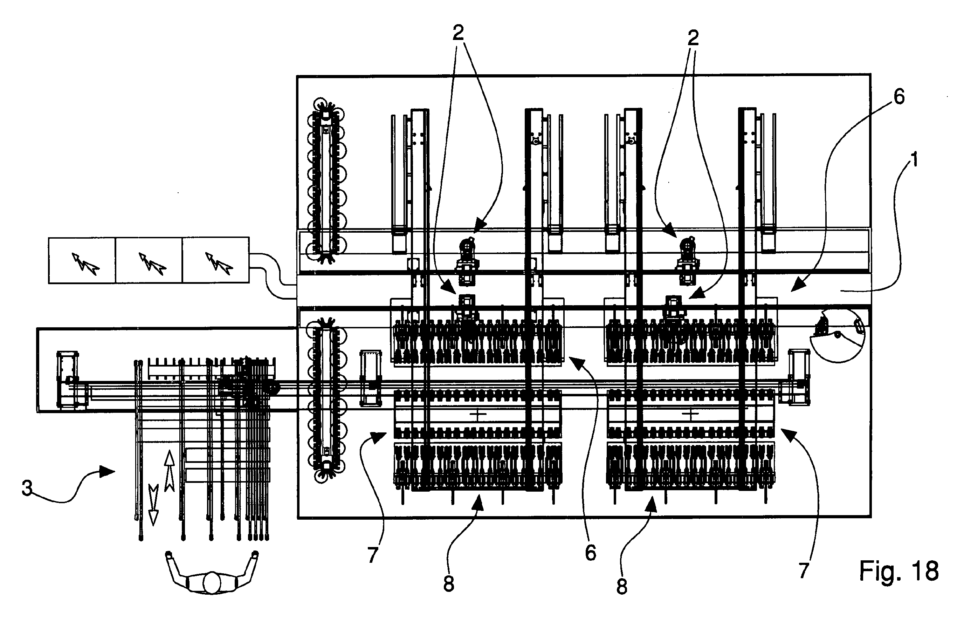

In figure 18 there is shown an apparatus provided with a first set of three locking devices 6, 7 and 8 (similarly to what has been disclosed until now) arranged alongside a second set of three locking devices 6, 7 and 8 that is the same as the first. Two adjacent and parallel guides will be set up (for example two pairs of longitudinal members) to slide the two groups (terns) of locking devices. The upper crosspiece (always indicated as 1 by analogy) is longer than the apparatus in figure 1. Further, the operating units 2 could be arranged on only one, or, as in this case, on both sides of the crosspiece 1. In this specific case, the gripping device for loading/unloading the workpieces is movable on a portal that is independent of the one that carries the operating units.

In the examples disclosed above, each external gripper 60, 80 is able to take on a clear-away position, in which it is far from the workpiece and is excluded from the grasping action by rotation about a rotation pivot. It is nevertheless possible to provide other methods for taking on the clear-away position, for example by translation of the gripper, which can be carried by an articulated parallelogram support, or by an axial movement of the gripper, which can be carried by a linearly slidable support (slide or carriage).

It is possible to provide still other systems in which the gripper could be moved from the position in which it is inserted around a workpiece kept tight in collaboration with the other adjacent grippers by at least one movement (of extraction from the workpiece and/or reinsertion into the workpiece) with at least one motion component that is horizontal or anyway transverse to the frontal opening that is defined by the jaws of the gripper and with which the gripper is placed on the workpiece.

In the examples disclosed above the apparatuses are of the numeric control type. Two examples of fixed-portal apparatuses have been presented, with workpiece locking devices that are movable along one axis, in particular a horizontal axis (axis y-y), and operating units 2 that machine the workpiece and are movable at least along another axis, in particular a horizontal axis (axis x-x) and perpendicular to the movement axis y-y of the workpiece locking devices, and along still another axis (vertical axis z-z).

It is anyway possible to provide other examples, such as, for example, movable-portal apparatuses.

As is seen the grippers 60, 80 of the locking device 6, 8 can be excluded during machining (they can be moved to the clear-away position) such as to avoid all interference with the operating units that perform given machinings (for example drilling, milling, tenoning, etc). The excluded grippers can then be returned to the active locking position for the performing of other machinings in which it is desirable the workpiece is locked for the entire length thereof, in particular to ensure excellent finishing of the longitudinal profiling machining.

The choice of which grippers are to be excluded depends not only on the type machining to be performed but also on the length of the workpiece being machined.

It is possible to provide an apparatus having one or more groups of locking devices that are formed not of three devices 6, 7 and 8 as in the examples disclosed until now but of two locking devices facing and cooperating with one another as the first device 6 and the second device 7 (with a single row of second grippers 70), or of two locking devices facing and cooperating with one another as the first device 6 and the third device 8.

It has been seen how it is possible, owing to the apparatuses disclosed above, to perform various machinings without the need to release completely the workpiece. There is not even the need to perform movements in a longitudinal direction (in the cases illustrated in the direction x-x) of the grippers for the passage of the workpiece.

It has been seen that by doing so excellent repeatability is obtainable in the operation of positioning the workpiece, with consequent improvement of the quality of the machined product, as well as time-saving.

The number n of grippers of each row of grippers 60, 70, 80 can be greater than 5, or 10, or 15.

## Claims

1. Machining apparatus comprising:
a. at least one operating unit (2) configured for machining a workpiece (P) made of wood or of a material that is similar to wood;
b. a first locking device (6) comprising two or more first grippers (60) cooperating together to lock the workpiece (P), said first locking device (6) and said operating unit being able to perform a relative motion one with respect to the other; said two or more first grippers (60) being arranged adjacent to one another to form a first row of grippers; each of said two or more first grippers (60) having a pair of jaws (62, 63) that is able to assume an open position, wherein they define an opening for inserting and extracting the workpiece (P), and a closed locking position in which they clamp the workpiece (P) between two opposite sides, leaving free a frontal zone of the workpiece (P) comprised between the two opposite sides so as to enable the operating unit (2) to machine the frontal zone;
at least one or each of said two or more first grippers (60) is movable with respect to the other with the possibility of assuming a clear-away position wherein the jaws are extracted from the workpiece (P) whilst the jaws of the other gripper clamp the workpiece, a movement between said open position and said clear-away position having at least one motion component transverse to said opening to enable both the jaws to be extracted from the workpiece, and the jaws to be reinserted on the workpiece through a zone of the workpiece opposite said frontal zone;
**characterised by comprising a second locking device (7) located opposite said first locking device (6) with the possibility of performing relative movements, in a direction transverse to said first row of grippers (60), of mutual approaching and moving away, said second locking device (7) comprising a plurality of second grippers (70) cooperating together to lock the workpiece (P) and arranged adjacent to one another to form a second row of grippers (70) that is parallel to and faces said first row of grippers (60); there being provided a gripper-change configuration wherein the workpiece (P) is clamped, between two opposite sides both by said first row of grippers (60) and by said second row of grippers (70), and wherein said first and second row of grippers intervene on the workpiece on opposite sides with respect to the workpiece.**

2. Apparatus according to claim 1, wherein said operating unit (2) is movable on at least a first axis (x-x) and said first row of grippers is parallel to said first axis (x-x), said relative motion between said first locking device (6) and said operating unit being in at least a second axis (y-y) transverse to said first axis (x-x).

3. Apparatus according to claim 2, wherein said first axis (x-x) and said second axis (y-y) are horizontal, said pair of jaws comprising an upper jaw (62) and a lower jaw (63) which in the open position define an opening for inserting and extracting the workpiece (P) with a prevalently vertical extent and which in the closed position clamp the workpiece between an upper side and a lower side, said left free frontal zone of the workpiece (P) being a horizontal longitudinal zone, the movement of the gripper between said open and clear-away positions having at least one horizontal motion component.

4. Apparatus according to any preceding claim, wherein said two or more first grippers (60) each comprise a gripper body (67) that carries said jaws (62; 63) and is coupled with a support (61) by a rotation pivot (65) with an axis that is parallel to said first row of grippers, the movement between said open position and said clear-away position comprising a rotation about said rotation pivot.

5. Apparatus according to **any preceding** claim, wherein each second gripper of said second row of grippers (70) is carried by a support with the possibility of performing a tilt movement wherein at least one jaw of the second gripper is tilted forwards to promote the insertion on the workpiece of the second gripper in open position, and a return movement wherein at least said jaw is aligned on the workpiece to promote the locking action wherein the second gripper clamps the workpiece in the closed position.

6. Apparatus according to **any preceding** claim, comprising a third locking device (8) having a plurality of third grippers (80) arranged adjacent to one another to form a third row of grippers (80), said second locking device (7) being located between said first (6) and third (8) locking device, said second locking device (7) having a further second row of grippers (70) that is parallel to and faces said third row of grippers (80), said second (7) and third (8) locking device having the possibility of performing mutual approaching and moving away movements in a direction transverse to said second and third row of grippers (70, 80).

7. Apparatus according to any preceding claim, wherein said first row of grippers and/or said second row of grippers and/or said third row of grippers comprises at least a number n of grippers, with n > 5, or n > 10, or n > 15.

8. Control method for controlling an apparatus according to any preceding claim, said method comprising the steps of:
a. performing longitudinal profiling of said frontal zone of the workpiece with the workpiece maintained locked by at least said two or more first grippers (60) in a locking position;
b. performing, before and/or after said longitudinal profiling, at least another machining on the workpiece with the workpiece maintained locked by at least a first gripper (60) in a locking position and with at least another first gripper (60) in a clear-away position, said at least another machining being performed at or near a zone of the workpiece left free by the first gripper (60) moved from the locking position to the clear-away position;
c. passing the workpiece from said first locking device (6) to said second locking device (7) and then performing longitudinal profiling on a zone of the workpiece opposite said frontal zone.

## Patentansprüche

1. Bearbeitungsvorrichtung umfassend:
a. mindestens eine Betätigungseinheit (2), die zum Bearbeiten eines Werkstücks (P) gestaltet ist, das aus Holz oder einem Material, das ähnlich dem Holz ist, besteht,;
b. eine erste Klemmvorrichtung (6), die zwei oder mehrere erste Greifer (60) umfasst, die miteinander kooperieren, um das Werkstück zu klemmen, wobei die erste Klemmvorrichtung (6) und die Betätigungseinheit in der Lage sind, eine relative Bewegung in Bezug aufeinander durchzuführen; wobei die zwei oder mehreren ersten Greifer (60) benachbart zueinander angeordnet sind, um eine erste Greiferreihe zu bilden; wobei jede der zwei oder mehreren ersten Greifer (60) ein Klemmbackenpaar (62, 63) aufweist, das in der Lage ist, eine offene Position einzunehmen, in der sie ein Öffnen zum Einführen oder Entnehmen des Werkstücks (P) definieren, und eine geschlossene Klemmposition, in der sie das Werkstück (P) zwischen zwei gegenüberliegenden Seiten festklemmen und dabei eine vordere Zone des Werkstücks (P) frei lassen, die zwischen den zwei gegenüberliegenden Seiten derart enthalten ist, dass der Betätigungseinheit (2) ermöglicht wird, die vordere Zone zu bearbeiten;
wobei mindestens einer oder mehrere der zwei oder mehreren ersten Greifer (60) in Bezug auf den anderen beweglich ist mit der Möglichkeit, eine Abtragsposition einzunehmen, in der die Klemmbacken von dem Werkstück (P) abgezogen werden, während die Klemmbacken des anderen Greifers das Werkstück festklemmen, eine Bewegung zwischen der offenen Position und der Abtragsposition hat mindestens eine Bewegungskomponente quer zum Öffnen, um zu ermöglichen, beide Klemmbacken von dem Werkstück abzuziehen und die Klemmbacken wieder an das Werkstück über eine Zone des Werkstücks, entgegengesetzt zu der vorderen Zone, einzusetzen;
**gekennzeichnet durch** Aufweisen einer zweiten Klemmvorrichtung (7), die gegenüberliegend zu der ersten Klemmvorrichtung (6) angeordnet ist mit der Möglichkeit, Relativbewegungen in einer Richtung quer zu der ersten Greiferreihe (60) auszuführen, um ein wechselseitiges Annähern und Wegführen durchzuführen, wobei die zweite Klemmvorrichtung (7), die eine Mehrzahl von zweiten Greifern (70) umfasst, die miteinander kooperieren, um das Werkstück (P) zu klemmen, und benachbart zueinander angeordnet sind, um eine zweite Greiferreihe (70) zu bilden, die parallel und gegenüberstehend zu der ersten Greiferreihe (60) ist; wobei dort eine Greiferwechselstruktur vorgesehen ist, bei der das Werkstück (P) zwischen zwei gegenüberliegenden Seiten sowohl von der ersten Greiferreihe (60) als auch von der zweiten Greiferreihe (70) festgeklemmt wird, und wobei die erste und die zweite Greiferreihe auf das Werkstück auf gegenüberliegenden Seiten in Bezug auf das Werkstück zu greifen.

2. Vorrichtung nach Anspruch 1, wobei die Betätigungseinheit (2) auf mindestens einer ersten Achse (x-x) bewegbar ist, und wobei die erste Greiferreihe parallel zu der ersten Achse (x-x) ist, und wobei die Relativbewegung zwischen der ersten Klemmvorrichtung (6) und der Betätigungseinheit mindestens auf einer zweiten Achse (y-y) quer zu der ersten Achse (x-x) liegt.

3. Vorrichtung nach Anspruch 2, wobei die erste Achse (x-x) und die zweite Achse (y-y) horizontal sind, wobei das Klemmbackenpaar eine obere Klemmbacke(62) und eine untere Klemmbacke (63) umfasst, welche in der offenen Position eine Öffnung zum Einführen und Entnehmen des Werkstücks (P) mit einem überwiegend vertikalen Ausmaß definieren und welche in der geschlossenen Position das Werkstück zwischen einer oberen Seite und einer unteren Seite festklemmen, wobei die verbleibende freie vordere Zone des Werkstücks (P) eine horizontale Längszone ist, wobei die Bewegung des Greifers zwischen den offenen und den Abtragspositionen mindestens eine horizontale Bewegungskomponente aufweist.

4. Vorrichtung nach einem der vorhergehenden Ansprüche, wobei die zwei oder mehreren ersten Greifer (60) jeweils einen Greifkörper (67) aufweisen, der die Klemmbacken (62; 63) trägt und mit einem Halter (61) durch einen Drehzapfen (65) mit einer Achse gekoppelt ist, die parallel zu der ersten Greiferreihe ist, wobei die Bewegung zwischen der offenen Position und der Abtragsposition eine Drehung um den Drehzapfen umfasst.

5. Vorrichtung nach einem der vorhergehenden Ansprüche, wobei jeder zweite Greifer der zweiten Greiferreihe (70) durch einen Halter getragen wird mit der Möglichkeit, eine Neigungsbewegung durchzuführen, bei der mindestens eine Klemmbacke des zweiten Greifers vorwärts geneigt ist, um das Einführen von dem Werkstück des zweiten Greifers in offener Position zu unterstützen, und eine Wendebewegung, bei der mindestens die Klemmbacke auf das Werkstück ausgerichtet ist, um die geschlossene Position zu unterstützen, in welcher der zweite Greifer das Werkstück in einer geschlossenen Position festklemmt.

6. Vorrichtung nach einem der vorhergehenden Ansprüche, umfassend eine dritte Klemmvorrichtung (8), die eine Mehrzahl von dritten Greifern (80) aufweist, die benachbart zueinander angeordnet sind, um eine dritte Greiferreihe (80) zu bilden, wobei die zweite Klemmvorrichtung (7) zwischen der ersten (6) und dritten (8) Klemmvorrichtung angeordnet ist, wobei die zweite Klemmvorrichtung (7) eine weitere zweite Greiferreihe (70) aufweist, die parallel und gegenüberstehend zu der dritten Greiferreihe (80) ist, wobei die zweite (7) und die dritte (8) Klemmvorrichtung die Möglichkeit des Durchführens wechselseitiger Annährungs- und Wegführbewegungen in einer Richtung quer zu der zweiten und dritten Greiferreihe (70, 80) aufweist.

7. Vorrichtung nach einem der vorhergehenden Ansprüche, wobei die erste Greiferreihe und/oder die zweite Greiferreihe und/oder die dritte Greiferreihe mindestens eine Anzahl n von Greifern mit n > 5 oder n >10 oder n > 15 aufweist.

8. Steuerverfahren zum Steuern einer Vorrichtung nach einem der vorhergehenden Ansprüche, wobei das Verfahren die Schritte umfasst:
a. Durchführen einer Längsprofilierung der vorderen Zone des Werkstücks mit dem Werkstück, das klemmend durch mindestens zwei oder mehreren erste Greifer (60) in einer Klemmposition gehalten wird;
b. Durchführen vor und/oder nach der Längsprofilierung mindestens einer anderen Bearbeitung des Werkstücks mit dem Werkstück, das klemmend durch mindestens einen ersten Greifer (60) in einer Klemmposition und mit mindestens einem anderen ersten Greifer (60) in einer Abtragsposition gehalten wird, wobei die mindestens eine andere Bearbeitung bei oder nahebei einer Zone des Werkstücks durchgeführt wird, die durch den ersten Greifer (60) frei gelassen ist, der von der Klemmposition in die Abtragsposition bewegt wird.
c. Übergeben des Werkstücks von der ersten Klemmvorrichtung (6) zu der zweiten Klemmvorrichtung (7) und dann Durchführen der Längsprofilierung auf einer Zone des Werkstücks, die entgegengesetzt zu der vorderen Zone liegt.

## Revendications

1. Appareil d'usinage, comprenant :
a. au moins une unité de fonctionnement (2) configurée pour usiner une pièce de travail (P) qui est en bois ou en un matériau qui est semblable au bois ;
b. un premier dispositif de verrouillage (6) comprenant deux ou plusieurs premiers organes de préhension (60) coopérant les uns avec les autres pour immobiliser la pièce de travail (P), ledit premier dispositif de verrouillage (6) et ladite unité de fonctionnement étant aptes à avoir un mouvement relatif de l'un par rapport à l'autre ; lesdits deux ou plusieurs premiers organes de préhension (60) étant disposés au voisinage les uns des autres pour former une première rangée d'organes de préhension ; chacun desdits deux ou plusieurs premiers organes de préhension (60) comportant une paire de mâchoires (62, 63) qui est apte à prendre une position ouverte, dans laquelle celles-ci définissent une ouverture destinée à l'insertion et à l'extraction de la pièce de travail (P), et une position fermée de verrouillage, dans laquelle elles serrent la pièce de travail (P) entre deux côtés opposés, en laissant libre une zone frontale de la pièce de travail (P) comprise entre les deux côtés opposés, de manière à permettre à l'unité de fonctionnement (2) d'usiner la zone frontale ;
au moins l'un, ou chacun, desdits deux ou plusieurs premiers organes de préhension (60) est déplaçable par rapport à l'autre avec la possibilité de prendre une position d'enlèvement dans laquelle les mâchoires sont dégagées de la pièce de travail (P) tandis que les mâchoires de l'autre organe de préhension serre la pièce de travail, le mouvement entre ladite position ouverte et ladite position d'enlèvement ayant au moins une composante de mouvement transversale à ladite ouverture pour permettre à la fois que les mâchoires soient dégagées de la pièce de travail et que les mâchoires soient réintroduites sur la pièce de travail par l'intermédiaire d'une zone de la pièce de travail opposée à ladite zone frontale ;
**caractérisé en ce qu'**il comprend un deuxième dispositif de verrouillage (7) situé à l'opposé dudit premier dispositif de verrouillage (6) avec la possibilité d'effectuer des mouvements relatifs, l'un par rapport à l'autre, dans une direction transversale à ladite première rangée d'organes de préhension (60), des mouvements d'approche et d'éloignement mutuels, ledit deuxième dispositif de verrouillage (7) comprenant une pluralité de deuxièmes organes de préhension (70) qui coopèrent les uns avec les autres pour immobiliser la pièce de travail (P) et qui sont disposés au voisinage les uns des autres pour former une deuxième rangée d'organes de préhension (70) qui est parallèle à et fait face à ladite première rangée d'organes de préhension (60) ; une configuration de modification des organes de préhension étant prévue dans laquelle la pièce de travail (P) est serrée, entre deux côtés opposés, à la fois par ladite première rangée d'organes de préhension (60) et par ladite deuxième rangée d'organes de préhension (70), et dans laquelle lesdites première et deuxième rangées d'organes de préhension interviennent sur la pièce de travail sur des côtés qui sont opposés en ce qui concerne la pièce de travail.

2. Appareil selon la revendication 1, dans lequel ladite unité de fonctionnement (2) est déplaçable sur au moins un premier axe (x-x) et ladite première rangée d'organes de préhension est parallèle audit premier axe (x-x), ledit mouvement relatif entre ledit premier dispositif de verrouillage (6) et ladite unité de fonctionnement se produisant selon au moins un deuxième axe (y-y) transversal audit premier axe (x-x).

3. Appareil selon la revendication 2, dans lequel ledit premier axe (x-x) et ledit deuxième axe (y-y) sont horizontaux, ladite paire de mâchoires comprenant une mâchoire supérieure (62) et une mâchoire inférieure (63) qui, dans la position ouverte, définissent une ouverture permettant d'insérer et d'extraire la pièce de travail (P) selon une extension qui est, de manière prédominante, verticale et qui, dans la position fermée, serrent la pièce de travail entre un côté supérieur et un côté inférieur, ladite zone frontale laissée libre de la pièce de travail (P) étant une zone longitudinale horizontale, et le mouvement de l'organe de préhension entre lesdites positions ouverte et d'enlèvement ayant au moins une composante de mouvement horizontale.

4. Appareil selon une quelconque revendication précédente, dans lequel lesdits deux ou plusieurs premiers organes de préhension (60) comprennent chacun un corps (67) d'organe de préhension qui porte lesdites mâchoires (62, 63) et est couplé à un support (61) par l'intermédiaire d'un pivot de rotation (65) ayant un axe qui est parallèle à ladite première rangée d'organes de préhension, le mouvement entre ladite position ouverte et ladite position d'enlèvement comprenant une rotation autour dudit pivot de rotation.

5. Appareil selon une quelconque revendication précédente, dans lequel chaque deuxième organe de préhension de ladite deuxième rangée d'organes de préhension (70) est porté par un support avec la possibilité d'effectuer un mouvement d'inclinaison selon lequel au moins une mâchoire du deuxième organe de préhension est inclinée vers l'avant pour permettre l'insertion, sur la pièce de travail, du deuxième organe de préhension en position ouverte, et un mouvement de retour selon lequel au moins ladite mâchoire est alignée sur la pièce de travail pour permettre l'action de verrouillage conformément à laquelle le deuxième organe de préhension serre la pièce de travail dans la position fermée.

6. Appareil selon une quelconque revendication précédente, comprenant un troisième dispositif de verrouillage (8) comportant une pluralité de troisièmes organes de préhension (80) disposés au voisinage les uns des autres pour former une troisième rangée d'organes de préhension (80), ledit deuxième dispositif de verrouillage (7) étant situé entre lesdits premier (6) et troisième (8) dispositifs de verrouillage, ledit deuxième dispositif de verrouillage (7) comportant une deuxième rangée supplémentaire d'organes de préhension (70) qui est parallèle à et fait face à ladite troisième rangée d'organes de préhension (80), lesdits deuxième (7) et troisième (8) dispositifs de verrouillage ayant la possibilité d'effectuer l'un par rapport à l'autre des mouvements d'approche et d'éloignement dans une direction transversale auxdites deuxième et troisième rangées d'organes de préhension (70, 80).

7. Appareil selon une quelconque revendication précédente, dans lequel ladite première rangée d'organes de préhension et/ou ladite deuxième rangée d'organes de préhension et/ou ladite troisième rangée d'organes de préhension comprend (comprennent) au moins un nombre n d'organes de préhension, avec n > 5, ou n > 10, ou n > 15.

8. Procédé de commande destiné à la commande d'un appareil selon une quelconque revendication précédente, ledit procédé comprenant les étapes qui consistent à :
a. effectuer un profilage longitudinal de ladite zone frontale de la pièce de travail, avec la pièce de travail maintenue immobilisée par au moins lesdits deux ou plusieurs premiers organes de préhension (60) dans une position de verrouillage ;
b. effectuer, avant et/ou après ledit profilage longitudinal, au moins un autre usinage sur la pièce de travail, avec la pièce de travail maintenue immobilisée par au moins un premier organe de préhension (60) dans une position de verrouillage et avec au moins un autre premier organe de préhension (60) dans une position d'enlèvement, ledit au moins un autre usinage étant effectué dans une zone, ou près d'une zone, de la pièce de travail qui est laissée libre par le premier organe de préhension (60) passé de la position de verrouillage à la position d'enlèvement ;
c. transférer la pièce de travail dudit premier dispositif de verrouillage (6) audit deuxième dispositif de verrouillage (7) et, ensuite, effectuer un profilage longitudinal sur une zone de la pièce de travail opposée à ladite zone frontale.
